# EUROPEAN PATENT SPECIFICATION

(11) **EP 0 661 407 B1**
(45) Date of publication and mention of the grant of the patent: **19.04.2000**
(21) Application number: 94203598.1
(22) Date of filing: 12.12.1994
(51) Int. Cl.: E04C 2/36, B29C 63/00

(54) **Method and device for the application of (ventilation) tape to the top edges of cavity sheets**
Verfahren und Vorrichtung zum Aufbringen eines Lüftungsbandes auf die Kanten einer Stegdoppelplatte
Procédé et dispositif pour appliquer un ruban de ventilation sur les chants d'une plaque alvéolaire

(30) Priority: 13.12.1993 NL 9302164
(43) Date of publication of application: 05.07.1995
(73) Proprietor: MULTIFOIL B.V., NL-3525 BB Utrecht (NL)
(72) Inventor: Hooft, Johannes Wilhelmus Gerardus, NL-4124 AV Hagestein (NL)
(74) Representative: Jilderda, Anne Ayolt

(56) References cited:
- EP-A- 0 376 386
- FR-A- 2 088 005
- FR-A- 2 145 604
- GB-A- 1 018 175
- US-A- 2 056 450

## Description

The invention pertains to a method for the application of tape, and in particular of ventilation tape, to - and for purposes of sealing the top edge of a cavity sheet and the related device which method comprises at least two parallel plates which are kept at a distance from each other and are mutually connected by means of parallel spacers extending perpendicular to the top edge, at least the outer surfaces of the cavity sheet, which constitute its outer walls, being covered with a protective foil, whereby the tape is folded over said top edge along the entire width of the edge, with its extremes adherent to both plates, so that the top edge is completely covered by the tape.

The use of tape, and in particular of ventilation tape, for the aforementioned purpose is described in the European patent EP-A-0376386: the cavity sheets are employed for purposes of covering rooms and streets and the employment of the ventilation tape in question prevents the formation of impurities such as those of algal growth between the plates.

Problems arise during the ― up to now largely manual ― application of the tape to the top edge of the cavity sheet.

Firstly, the outer surfaces of the plates are covered with a protective layer and they have to remain that way even after the tape has been applied.

Secondly, the tape must be applied accurately symmetrically over the channel openings in the top side of the sheet; the openings in the tape should be positioned in the middle between both plates.

The invention provides a method by which the goal can be achieved in a relatively simple manner, and likewise provides a device with which the method can be realised.

To this end, the method is characterised by the following successively executed steps:
- the cavity sheet is furnished over its entire width at both sides with an adhesive track, extending near the top edge on the protective foil while adhering to said foil;
- the adhesive track is brought into contact with the mantle of a cylinder, which cylinder can be rotated along its longitudinal axis, which axis runs largely parallel to the top edge of the panel, so that the protective foil adheres to the cylinder mantle via the adhesive;
- the protective foil is rolled over a certain length on the cylinder mantle;
- the tape is adhered to one side and over the entire edge of the surface of the cavity sheet which has thus been stripped of the protective foil across a pre-determined portion of the tape's width, to be chosen in connection with the required symmetry;
- the tape is folded over the top edge of the cavity sheet, where it is subsequently further folded and made adhere to the top edge of the surface of the other plate;
- an adhesive track is applied to the entire width of the parts of the tape lying on top of the top edges of both plates;
- the protective foil rolled upon the mantle of the cylinder is unrolled again onto the surface of the plate of the cavity sheet and its end is brought into contact with the adhesive track located thereupon so that it re-adheres to that plate.

It is therefore essential that a portion of the protective layers of the outer surfaces is first removed and is stored on the mantle of a cylinder and that these portions are put back in their original positions after the tape has been applied, with the difference, however, that they no longer directly lie with their extreme on the surface of the outer wall, but that the (edge of the) tape now lies between them. The taking up of the protective layer occurs by means of allowing an extreme of the layer furnished with an adhesive track to adhere to the cylinder mantle, subsequent to which the layer can be easily rolled up. The same technique ― via an adhesive track ― is employed again for the process of unrolling the foil. One must naturally ensure that the second adhesion ― that is to say the one with the aid of the second adhesive tract ― is stronger that the first adhesion. This can be easily achieved by the use of a melting adhesive which becomes sticky-fluid when heated but is not any longer so when cool; the adhesive is applied while warm and then consequently has adhesiveness, but, when in this manner the second adhesive track comes in contact with the layer rolled upon the cylinder mantle, the adhesiveness of the first adhesive tract will have all but vanished. It is also possible to employ a self-adhesive layer instead of glue.

It should be obvious that the method in accordance with the invention can also be applied on cavity sheets which consist of more than two plates located at a distance from each other.

A device for the realisation of the aforementioned method is characterised in that it consists of a conveyor path for a cavity sheet which conveyor path is equipped with two cylindrical transport rollers which can be driven in both directions, one placed above the path, and one placed under the path, each with a length which is at least equal to the width of the cavity sheet which is to be transported, rotatable around axis parallel to the cavity sheet, perpendicular to the direction ef transport, while both axis lie in a single plane perpendicular to the direction of transport of the cavity sheet, and, in during operation, cooperating by means of their mantles, with the surfaces of the upper and lower side plates of the cavity sheet, respectively, in such a manner that the cavity sheet can be transported both forwards and backwards, whereby the conveyor path is further provided with a device located behind the rollers, as viewed in the direction of transport of the cavity sheet, for applying an adhesive track or self-adhesive layer along the edges of the upper and lower plate, and is moreover characterised in that it is equipped with a roll of tape located alongside the conveyor path and behind the rollers when viewed in the direction of transport of the cavity sheet, from which roll the tape can be applied, in a direction perpendicular to the direction of transport of the cavity sheet, and with a portion of the tape-width in the plane thereof, to the end of the a plate of the cavity sheet, and is characterised in that means are situated at the location where the tape is applied to a plate by which the tape can be wrought around the top edge of the cavity sheet and can be affixed against the end of the surface of the other plate.

By driving both transport cylinders at each side of the cavity sheet with equal speed, the cavity sheet is transported. The conveyance is halted when the sheet has passed over the cylinders for a certain portion of its length. The adhesive means, for example, a track of glue, is applied to the protective layers on the lower and upper wall plate along the end over the entire width of the plate, and, by now rotating the cylinders in the opposite direction, the plate is transported backwards again to such a degree that the adhesive (for example the track of glue) is located where the cylinder mantles function together with the plates of the cavity sheet. The protective layers shall now via the tracks of glue ― after a couple of seconds ― adhere to those cylinder mantles. The direction of rotation of the cylinders is now reversed yet again, so that the cavity sheet is shifted forward a certain distance again. The protective layers which were situated along that length of the outer surfaces are rolled off therefrom and are rolled up on the cylinder mantles. The conveyance is now stopped again and the tape is made adhere with a portion of its width to the edge of one of the surfaces of a plate ― for example, the upper plate ― and the portion of the tape which protrudes outside and over the end of the plate is folded over the edge of the plate and the portion then still protruding is folded over the edge of the other plate and is made adhere thereto.

Subsequently, adhesive tracks are applied in turn to the portions of the tape which have been folded over the ends of the plate and the cavity sheet is shifted back again until the end ― now covered with tape ― is again located between the transport cylinders. An adhesion to the ends of the protective foils rolled upon the cylinder mantles is brought about at that location via the second adhesive track, the tape shall be pressed against the plates once more, and the cavity sheet can be removed from between the cylinders.

In a preferential embodiment of the device in accordance with the invention, said device is equipped along one of its sides with a fixed abutment and along the other side with a movable and adjustable abutment which is perpendicular to the direction of transport of the sheet, and the axis of one of the transport cylinders is adjustably movable in a direction perpendicular to the surface of the cavity sheet. In this manner, the width of the sheet can be registered with the aid of the first adjustable abutment, and the thickness of the sheet can be registered with the aid of the cylinder which can be adjusted in height. These details are used for the accurate and symmetrical positioning of the tape at the top edge of the sheet. The adjustment of the first adjustable abutment and that of the height of the cylinder axis can occur totally automatically, as can the derived positioning of the cavity sheet for the application of the tape in the desired manner. A removable abutment for the cavity sheet is preferably situated behind the conveyor rollers as seen in the direction of transport of the cavity sheet.

In a further preferential embodiment in accordance with the invention, the device demonstrates the characteristic that the means with which the tape is folded around the top edge of the cavity sheet is a roller, which roller can be rotated around an axis parallel to the cavity sheet and perpendicular to the direction of transport, and which roller can be moved in a plane perpendicular to the direction of transport of the cavity sheet.

With the aid of this roller (by means of moving it downwards), the tape which is supplied from a tape dispenser and which is fixed to the edge of a plate of the cavity sheet is folded around the top edge of the sheet and pressed against it. By moving the roller further in a downward direction until its mantle just arrives at the lower plate and by moving the cavity sheet just a little bit further under the cylinders with the aid of those cylinders, the roller will press the portion of the tape protruding over the edge of the cavity sheet against the undermost plate of the cavity sheet.

The invention shall now be further elucidated on the basis of the drawing, within which drawing the device in accordance with the invention is depicted in perspective in the various stages of completion of the method in accordance with the invention.

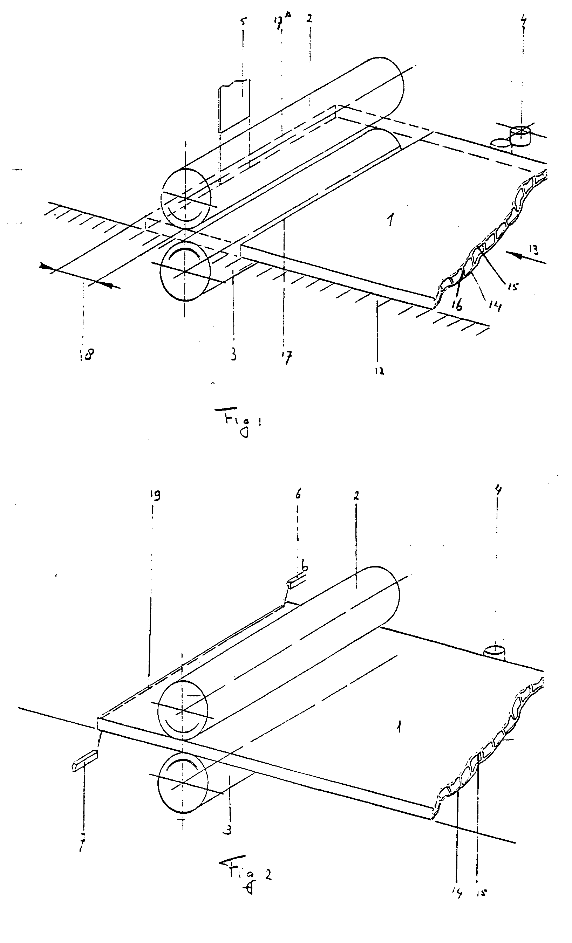

In Figure 1, 1 depicts a twin-walled cavity sheet with plates 14 and 15, which plates are separated from each other by means of spacers 16. The panel 1 is laid against the fixed abutment 12 and is slid between the mantles of the rollers or cylinders 2 and 3 until the sheet 1 touches the abutment 5. It then protrudes over a length 18 behind the cylinders. Subsequently, the pressure roller 4 is pressed against the other length of the sheet 1, whereby the width of the sheet is registered. The cylinder 2, which can be moved vertically, is then lowered and impresses upon the plate 15 with a predetermined force. In this manner, the thickness of the plate is also registered and the abutment 5 is tucked away.

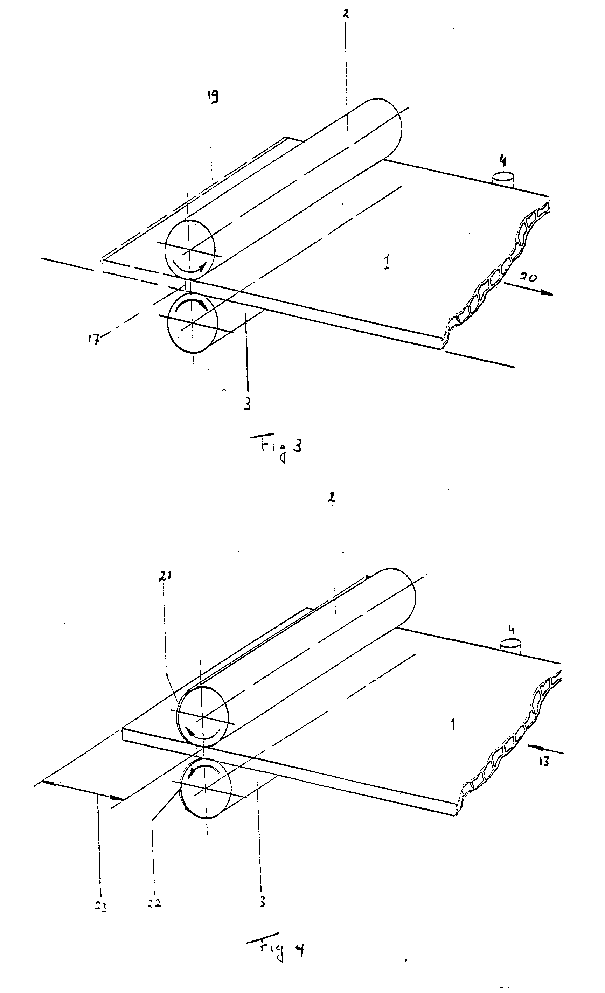

In Figure 2, the cavity sheet 1 is transported further, after removal of the abutment 5, between the cylinders 2 and 3. Adhesive tracks are then applied, from the adhesive dispensers 6 and 7, to the edges of the plates 15 and 14, respectively, on top of the protective layers present on those plates and running across the entire width of those plates (figure 2 shows adhesive track 19 on plate 15). It is to be noted that, instead of making use of glue, one can also make use of a self-adhesive layer.

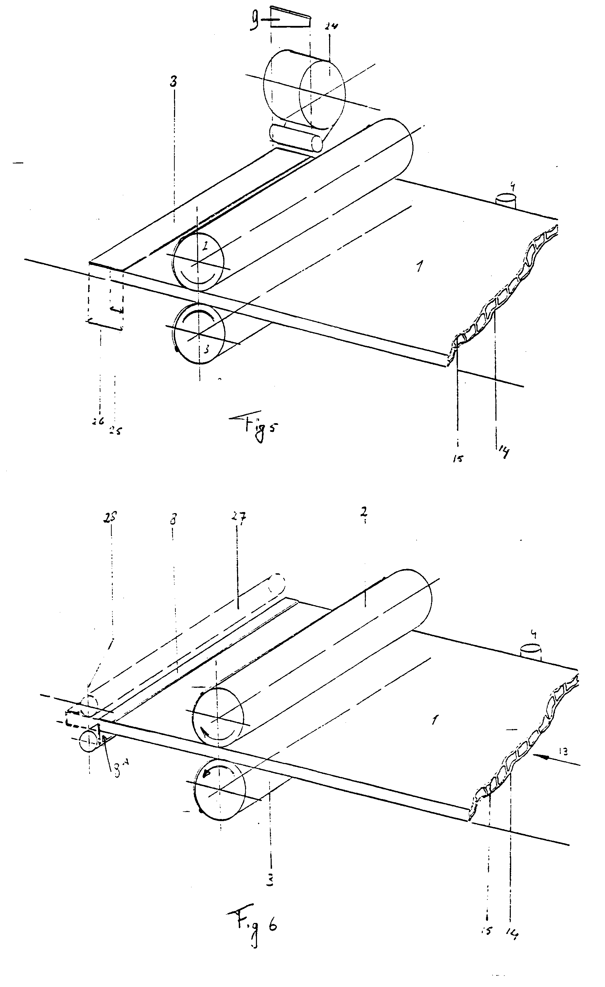

Figure 3 shows how the cavity sheet is transported back again in the direction 20 after the adhesive tracks 19 have been applied, until the extreme 17 cavity sheet arrives at the location where the cylinders 2 and 3 work together with their mantles and the outer surfaces of the cavity sheet 1. The adhesive tracks 19 applied to the protective layers shall now, within a few seconds, commence the process of adhesion to the mantles of the cylinders 2 and 3.

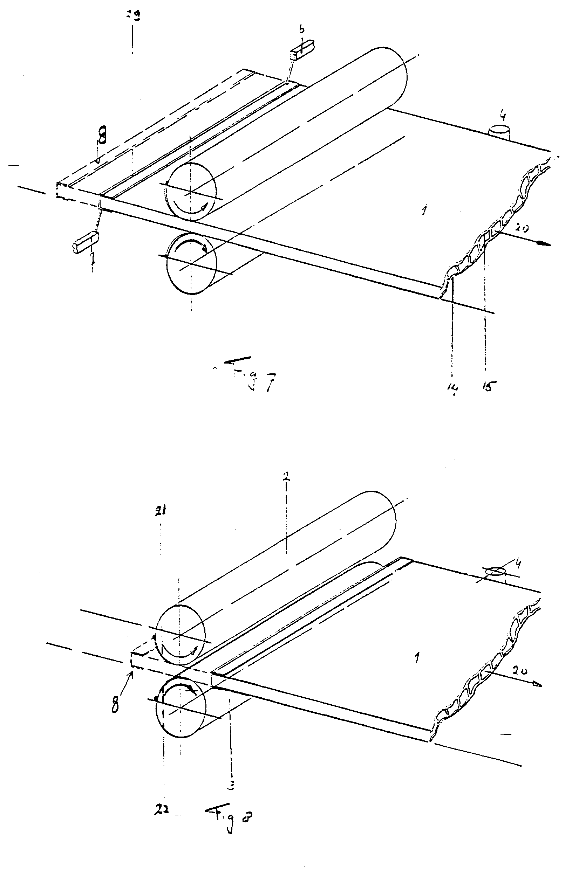

Figure 4 depicts how the cavity sheet 1 is subsequently transported again over a distance 23 in the direction 13. During this conveyance the protective layers or foils 21 and 22 remain behind on the mantle 5 of the cylinders 2 and 3, respectively; they are rolled up on to it. The length 23 along which this transport takes place is dependent upon the thickness of the cavity sheet 1 and on the location where the tape 8 which is to be applied (see fig. 5) is supplied. One thing and another should be attuned to each other.

A tape dispenser 24 is drawn in Figure 5, from which tape dispenser the tape 8 is brought to the surface of the plate 15 of the cavity sheet 1. A portion 25 of the total width 26 of the tape 8 is applied to that surface 15. The tape should be fixed symmetrically over the top edge 17 of the cavity sheet 1; that is to say that the portion with which it is folded over the plate 15 should be just as wide as the portion with which ― in a further step of the method ― it will be folded over plate 14. As has been heretofore shown in the description accompanying figure 4, the symmetry in question can be obtained by selecting the correct value for the distance 23. In a concrete instance, 30% of the width of the tape will protrude under and over the plates of the cavity sheet (each) and 40% serves to seal the top edge of the sheet. After the application of the tape 8 to the plate 15, the tape is cut with the aid of the blade 9 that can be moved towards and away from the tape.

Figure 6 shows how the tape 8 can be folded over the top edge of the cavity sheet 1 and can be affixed thereto. A roller 27 is situated directly behind the location of the end of the cavity sheet 1 when the tape 8 is affixed thereto, which roller 27 can be rotated about an axis parallel to the plane of the cavity sheet and aimed perpendicularly to the direction of transport 13. This roller 27 can be moved in a plane perpendicular to the direction of transport along the line 28 and is positioned in such a manner that, when it moves in an upward or downward direction along the line 28, the mantle rolls along beside the top front edge of the cavity sheet 1. By moving it from top to bottom after the tape 8 has been applied, it will press the protruding piece of the tape against the top edge, and when, after the roller has arrived under the sheet 1, the cavity sheet is transported slightly further in the direction 13 so that it rolls over the mantle of the roller 27, the roller 27 will also fold the portion of tape 8A protruding under the panel 1 and press against the undermost side of the plate 14.

The situation with the tape 8 symmetrically folded around, and glued rigidly to, the top edge of the cavity sheet, is depicted in Figure 7. Herein it can be seen that the sheet is transported back again in the direction 20 until the top edge is again situated at the position of the glue dispensers 6 and 7 (see also figure 2). Adhesive tracks 29 are applied to both plates 14 and 15 in that position.

Figure 8 shows how the cavity sheet 1 is transported further in the direction 20. The protective layers 21 and 22 are thereby unrolled from the transport cylinders 2 and 3 and are glued at their extremes to the folded portions of tape via the adhesive tracks. At the same time those portions of the tape are once more additionally pressed upon by the transport cylinders rolling over them. In this manner, the tape is applied to the top edge of the cavity sheet 1 symmetrically and with the preservation of the protective layer.

## Claims

1. Method for the application of tape (8), and in particular of ventilation tape, to-and for purposes of sealing the top edge of a cavity sheet (1), which comprises at least two parallel plates (14,15) which are kept at a distance from each other and are mutually connected by means of parallel spacers (16) extending perpendicular to the top edge (17), at least the outer surfaces of the cavity sheet (1), which constitute its outer walls (14,15), being covered with a protective foil (21,22), whereby the tape (8) is folded over said top edge (17) along the entire width, with its extremes adherent to both plates (14,15), so that the top edge (17) is completely covered by the tape (8), characterised in that, the method comprises the following successively executed steps:
- the cavity sheet (1) is furnished over its entire width at both sides with an adhesive track (19), extending near the top edge (17) on the protective foil (21,22) while adhering to said foil;
- the adhesive track (19) is brought into contact with the mantle of a cylinder (2,3), which cylinder is rotated along its longitudinal axis, running largely parallel to the top edge of the sheet (1), so that the protective foil (21,22) adheres to the cylinder mantle (5) via the adhesive;
- the protective foil (21,22) is rolled over a certain length (23) on the cylinder mantle (5);
- the tape (8) is adhered to one side and over the entire edge of the surface of the cavity sheet (1) which has thus been stripped of the protective foil (21,22) across a predetermined portion of the tape's width, to be chosen in connection with the required symmetry;
- the tape (8) is folded over the top edge (17) of the cavity sheet (1), where it is subsequently further folded and made adhere to the edge of the surface of the other plate (15);
- an adhesive track (19) is applied to the entire width of parts of the tape (8) lying on top of the edges of both plates (14,15);
- the protective foil (21,22) rolled upon the mantle (5) of the cylinder (2,3) is unrolled again onto the surface of the plate (15) of the cavity sheet (1) and its end is brought in contact with the adhesive track (19) located thereupon so that the protective foil (21,22) re-adheres to that plate (15);

2. Device for the implementation of the method in accordance with claim 1, characterised in that, it comprises a conveyor path for a cavity sheet (1), equipped with two cylindrical transport rollers (2,3) which can be driven in both directions, and are placed above and beneath the conveyor path, the transport rollers (2,3) having a length which is at least equal to the width of the cavity sheet (1) which is to be transported, being rotatable around axis parallel to the cavity sheet (1), perpendicular to the direction of transport, while both axis lie in a single plane perpendicular to the cavity sheet (1), and, during operation, cooperating by means of their mantles (5), with the surfaces of the upper and lower plates (14,15) of the cavity sheet (1), respectively, in such a manner that the sheet (1) is transported both forwards and backwards, in that the conveyor path is further provided with a device located behind the rollers (2,3), as viewed in the direction of transport of the sheet (1), for applying an adhesive track (19) along the edges of the upper and lower plate (14,15), in that the conveyor path is moreover equipped with a roll of tape (8) located alongside the conveyor path and behind the rollers (2,3) as viewed in the direction of transport of the sheet (1), from which roll the tape (8) is applied, in a direction perpendicular to the direction of transport of the cavity sheet (1), over a part of its width to the edge of the plate, and that means are present to fold the tape (8) around the top edge (17) of the cavity sheet (1) and to affix it against the edge of the surface of the other plate.

3. Device in accordance with claim 2,
characterised in that the conveyor path is equipped along one of its sides with a fixed abutment and along its other side with a movable and adjustable abutment which is peradjustably pendicular to the direction of transport of the plate (1), and that an axis of one of the transport rollers (2,3) is adjustably movable in a direction perpendicular to the surface of the cavity sheet (1).

4. Device in accordance with claim 3,
characterised in that both the adjustment of the abutment in the direction of the width of the cavity sheet (1) and the adjustment in the direction of the thickness of the cavity sheet is accomplished automatically.

5. Device in accordance with one of the claims 2 - 4,
characterised in that a removable abutment for the cavity sheet is situated behind the transport rollers (2,3) as seen in the direction of transport of the cavity sheet (1).

6. Device in accordance with one of the claims 2 - 5,
characterised in that a tape dispenser (24) is located behind the transport rollers (2,3) at the side of the conveyor path for the cavity sheet (1).

7. Device in accordance with one of the claims 2 - 6,
characterised in that the means with which the tape (8) is folded around the top edge (17) of the cavity sheet (1) is a roller, which roller is rotated around an axis parallel to the cavity sheet (1) and perpendicular to the direction of transport, and which roller is moved in a plane perpendicular to the direction of transport of the cavity sheet (1).

## Patentansprüche

1. Verfahren zum Aufbringen eines Bandes (8) und im besonderen eines Lüftungsbandes, im beabsichtigten Sinne und zum Zweck der Abdichtung der oberen Kante einer Stegdoppelplatte (1), die aus mindestens Zwei parallelen Platten (14,15) besteht, die mit Hilfe paralleler Abstandsstücke (16), die sich senkrecht zur oberen Kante (17) erstrecken, auf einem Abstand voneinander gehalten werden und miteinander verbunden sind, wobei zumindest die Außenflächen der Stegdoppelplatte (1), die ihre Außenwände (14,15) bilden, mit einer Schutzfolie (21,22) bedeckt sind, und wobei das Band (8) um besagte obere Kante (17) entlang der gesamten Breite gefaltet und mit seinen äußersten Enden mit den beiden Platten (14,15) verbunden wird, so daß die obere Kante (17) vollständig vom Band (8) bedeckt wird,
dadurch gekennzeichnet, daß das Verfahren die folgenden aufeinanderfolgenden Schritte umfaßt:
- die Stegdoppelplatte (1) wird über ihre gesamte Breite beidseitig mit einer Klebstoffbahn (19) versehen, die sich nahe der oberen Kante (17) auf der Schutzfolie (21,22) erstreckt, und haftet auf besagter Folie;
- die Klebstoffbahn (19) wird mit dem Mantel eines Zylinders (2,3) in Berührung gebracht, welcher Zylinder um seine im wesentlichen parallel zu der oberen Kante der Platte (1) verlaufende Längsachse dreht, so daß die Schutzfolie (21,22) durch den Klebstoff am Zylindermantel (5) haftet;
- die Schutzfolie (21,22) wird über eine bestimmte Länge (23) auf dem Zylindermantel (5) aufgerollt;
- das Band (8) wird an einer Seite und über die gesamte Kante der Oberfläche der Stegdoppelplatte (1), welche auf diese Weise von der Schutzfolie (21,22) befreit worden ist, über einen vorbestimmten, im Zusammenhang mit der erforderlichen Symmetrie zu wählenden Abschnitt der Breite des Bandes geklebt;
- das Band (8) wird über die obere Kante (17) der Stegdoppelplatte (1) gefaltet, wo es anschließend weiter gefaltet wird und mit der Kante der Oberfläche der anderen Platte (15) verklebt wird;
- eine Klebstoffbahn (19) wird über die gesamte Breite auf den Abschnitten des Bandes (8), die auf den Kanten der beiden Platten (14,15) liegen, angebracht;
- die auf dem Mantel (5) des Zylinders (2,3) aufgerollte Schutzfolie (21,22) wird auf die Oberfläche der Platte (15) der Stegdoppelplatte (1) wieder abgerollt und ihr Ende wird mit der darauf befindlichen Klebstoffbahn (19) in Berührung gebracht, so daß die Schutzfolie (21,22) wieder aufder Platte (15) haftet;

2. Vorrichtung zur Verwirklichung des Verfahrens in Übereinstimmung mit Anspruch 1,
dadurch gekennzeichnet, daß sie eine Transportbahn für eine Stegdoppelplatte (1) enthält, die mit zwei zylindrischen Transportrollen (2,3) ausgerüstet ist, die in beiden Richtungen angetrieben werden können und oberhalb und unterhalb der Transportbahn angeordnet sind, die Transportrollen (2,3) haben eine Länge, die mindestens gleich der Breite der zu befördernden Stegdoppelplatte (1) ist, sie sind um eine Achse drehbar, die parallel zur Stegdoppelplatte (1) und senkrecht zur Transportrichtung liegt, während beide Achsen in einer einzigen Ebene senkrecht zur Stegdoppelplatte (1) liegen und im Betrieb mit ihren Mantelflächen (5) mit der Oberfläche der oberen bzw. unteren Platte (14,15) der Stegdoppelplatte (1) zusammenarbeiten, so daß die Platte (1) sowohl vorwärts als rückwärts transportiert wird; daß die Transportbahn ferner mit einer, in Transportrichtung der Platte (1) gesehen, hinter den Rollen (2,3) befindlichen Vorrichtung zum Auftragen einer Klebstoffbahn (19) entlang der Kante der oberen und der unteren Platte (14,15) versehen ist; daß die Transportbahn außerdem mit einer Rolle mit Band (8) ausgerüstet ist, die sich neben der Transportbahn und, in Transportrichtung der Stegdoppelplatte (1) gesehen, hinter den Rollen (2,3) befindet, von welcher Rolle das Band (8) in einer Richtung senkrecht zur Transportrichtung der Stegdoppelplatte (1) über einen Teil seiner Breite auf die Kante der Platte aufgetragen wird, und daß Mittel vorhanden sind zum Falten des Bandes (8) um die obere Kante (17) der Stegdoppelplatte (1), und zur Befestigung an der Kante der Oberfläche der anderen Platte.

3. Vorrichtung in Übereinstimmung mit Anspruch 2,
dadurch gekennzeichnet, daß die Transportbahn entlang einer ihrer Seiten mit einem festen Anschlag und entlang ihrer anderen Seite mit einem beweglichen und einstellbaren Anschlag versehen ist, welcher senkrecht zur Transportrichtung der Platte (1) eingestellt werden kann, und daß die Achse einer der Transportrollen (2,3) beweglich in einer Richtung senkrecht zur Oberfläche der Stegdoppelplatte (1) eingestellt werden kann.

4. Vorrichtung in Übereinstimmung mit Anspruch 3,
dadurch gekennzeichnet, daß sowohl die Einstellung des Anschlages in Richtung der Breite der Stegdoppelplatte (1) als auch die Einstellung in Richtung der Dicke der Stegdoppelplatte automatisch erfolgt.

5. Vorrichtung in Übereinstimmung mit einem der Ansprüche 2 - 4,
dadurch gekennzeichnet, daß sich ein entfernbarer Anschlag für die Stegdoppelplatte, in Transportrichtung der Stegdoppelplatte (1) gesehen, hinter den Transportrollen (2,3) befindet.

6. Vorrichtung in Übereinstimmung mit einem der Ansprüche 2 - 5,
dadurch gekennzeichnet, daß sich ein Spender (24) für Klebeband hinter den Transportrollen (2,3) an der Seite der Transportbahn für die Stegdoppelplatte (1) befindet.

7. Vorrichtung in Übereinstimmung mit einem der Ansprüche 2 - 6,
dadurch gekennzeichnet, daß das Mittel, womit das Band (8) um die obere Kante (17) der Stegdoppelplatte (1) gefaltet wird, eine Rolle ist, welche Rolle sich um eine Achse parallel zur Stegdoppelplatte (1) und senkrecht zur Transportrichtung dreht, und welche Rolle in einer Ebene senkrecht zur Transportrichtung der Stegdoppelplatte (1) bewegt.

## Revendications

1. Procédé d'application d'un ruban (8), et en particulier d'un ruban de ventilation à- et en particulier dans des buts de scellement du bord supérieur d'une plaque alvéolaire (1), qui comprend au moins deux plaques parallèles (14, 15) qui sont gardées à une certaine distance l'une de l'autre et sont mutuellement connectées au moyen de pièces d'écartement (16) parallèles s'étendant perpendiculairement par rapport au bord supérieur (17), au moins les surfaces externes de la plaque alvéolaire (1), qui constituent ses parois externes (14, 15), étant recouvertes d'un film protecteur (21, 22), la bande (8) étant pliée au-dessus dudit bord supérieur (17) sur toute la longueur, ses extrémités adhérant aux deux plaques (14, 15) de telle sorte que le bord supérieur (17) est complètement couvert par la bande (8) caractérisé en ce que le procédé comprend les étapes suivantes exécutées à la suite les unes des autres :
- la plaque alvéolaire (1) est pourvue sur toute sa longueur, des deux côtés, d'une trace adhésive (19) s'étendant près du bord supérieur (17) sur le film protecteur (21, 22) et adhérant audit film ;
- la trace adhésive (19) est mise en contact avec le manchon d'un cylindre (2, 3) lequel cylindre est tourné le long d'un axe longitudinal s'étendant en parallèle sur la quasi totalité du bord supérieur de la plaque (1) de telle sorte que le film protecteur (21, 22) adhère au manchon (5) du cylindre via l'adhésif ;
- le film protecteur (21, 22) est roulé sur une certaine longueur (23) sur le manchon (5) de cylindre ;
- la bande (8) est fixée à un côté et par-dessus la totalité du bord de la surface de la plaque alvéolaire (1) qui a donc été dépouillée du film protecteur (21, 22) sur une portion prédéterminée de la largeur de la bande à choisir en connexion avec la symétrie exigée ;
- la bande (8) est pliée par-dessus le bord supérieur (17) de la plaque alvéolaire où elle est ensuite pliée davantage et fixée au bord de la surface de l'autre plaque (15) ;
- une trace adhésive (19) est appliquée à toute la largeur des parties de la bande (8) reposant sur le dessus des bords des deux plaques (14, 15) ;
- le film protecteur (21, 22) roulé sur le manchon (5) du cylindre (2, 3) est de nouveau déroulé sur la surface de la plaque (15) de la plaque alvéolaire (1) et son extrémité est mise en contact avec la trace adhésive (19) située dessus de telle sorte que le film protecteur (21, 22) adhère de nouveau à cette plaque (15).

2. Dispositif pour l'application du procédé selon la revendication 1, caractérisé en ce qu'il comprend un espace d'acheminement pour une plaque alvéolaire (1) équipée de deux rouleaux de transport (2, 3) qui peuvent être déplacés dans les deux sens et sont placés au-dessus et en-dessous de l'espace d'acheminement, les rouleaux de transport (2, 3) ayant un longueur qui est au moins égale à la largeur de la plaque alvéolaire (1) qui doit être transportée, pouvant pivoter autour de l'axe parallèle à la plaque alvéolaire, perpendiculaire au sens du transport, alors que les deux axes reposent en un seul plan perpendiculaire à la plaque alvéolaire et coopérant, pendant le fonctionnement, au moyen de leurs manchons (5) avec les surfaces des plaques inférieure et supérieure (14, 15) de la plaque alvéolaire (1) respectivement, de manière telle que la plaque (1) est transportée à la fois vers l'avant et vers l'arrière, en ce que l'espace d'acheminement est en outre pourvu d'un dispositif situé derrière les rouleaux (2, 3) comme on peut le voir dans le sens du transport de la plaque (1), pour application d'une trace adhésive le long des bords des plaques supérieure et inférieure (14, 15), en ce que l'espace d'acheminement est en outre équipé d'un rouleau de bande (8) situé le long de l'espace d'acheminement et derrière les rouleaux (2, 3) comme on peut le voir sur le sens du transport de la plaque (1), à partir duquel rouleau la bande est appliquée, dans une direction perpendiculaire au sens de transport de la plaque alvéolaire (1), sur une partie de sa largeur jusqu'au bord de la plaque et en ce que les moyens sont présents pour plier la bande (8) autour du bord supérieur (17) de la plaque alvéolaire (1) et pour la fixer contre le bord de la surface de l'autre plaque.

3. Dispositif selon la revendication 2, caractérisé en ce que l'espace d'acheminement est pourvu, le long d'un de ses côtés, d'une butée fixe et, le long de son autre côté, d'une butée amovible et réglable qui est réglable de manière perpendiculaire au sens de transport de la plaque (1) et en ce qu'un axe d'un des rouleaux de transport (2, 3) est amovible de manière réglable dans une direction perpendiculaire à la surface de la plaque alvéolaire (1).

4. Dispositif selon la revendication 3, caractérisé en ce qu'à la fois le réglage de la butée dans le sens de la largeur de la plaque alvéolaire (1) et le réglage dans la direction de l'épaisseur de la plaque alvéolaire sont effectués de manière automatique.

5. Dispositif selon l'une quelconque des revendications 2 à 4, caractérisé en ce qu'une butée amovible pour la plaque alvéolaire est située derrière les rouleaux de transport (2, 3) comme on peut le voir dans le sens du transport de la plaque (1).

6. Dispositif selon l'une quelconque des revendications 2 à 5, caractérisé en ce le dispensateur (24) de bande est situé derrière les rouleaux de transport (2, 3) sur le côté de l'espace d'acheminement pour la plaque alvéolaire (1).

7. Dispositif selon l'une quelconque des revendications 2 à 6, caractérisé en ce que le moyen par lequel la bande (8) est pliée autour du bord supérieur (17) de la plaque alvéolaire (1) est un rouleau, lequel rouleau pivote autour d'un axe parallèle à la plaque alvéolaire (1) et perpendiculaire au sens de transport et lequel rouleau bouge dans un plan perpendiculaire au sens du transport de la plaque alvéolaire (1).
